# FASCICULE DE BREVET EUROPEEN

(11) **EP 2 300 794 B1**
(45) Date de publication et mention de la délivrance du brevet: **09.10.2013**
(21) Numéro de dépôt: 09732333.1
(22) Date de dépôt: 20.03.2009
(51) Int. Cl.: G01K 11/06

(54) **DETECTEUR DE MODIFICATION DE TEMPERATURES DANS LES CONGELATEURS AFIN DE RECOMMANDATION DE DIFFERENTES DUREES DE CONSERVATION DES DENREES ALIMENTAIRES.**
CHEMISCHE ZUSAMMENSETZUNG ZUM DETEKTIEREN VON GEFRIERSCHRANKTEMPERATURÄNDERUNGEN
CHEMICAL COMPOSITION FOR DETECTING FREEZER TEMPERATURE CHANGES

(30) Priorité: 02.04.2008 FR 0801810
(43) Date de publication de la demande: 30.03.2011
(73) Titulaire: Sarl Playcube, 75005 Paris (FR)
(72) Inventeur: ELBAZ, Alain, F-75008 Paris (FR)
(86) Numéro de dépôt international: PCT/FR2009/000299
(87) Numéro de publication internationale: WO 2009/127795

(56) Documents cités:
- EP-A- 0 471 631
- ANONYMOUS: "Phase Diagrams - water/sodium chloride" INTERNET ARTICLE, [Online] 2002, pages 1-3, XP002549213 Extrait de l'Internet: URL:http://web.archive.org/web/20020305035 733/http://www.ucalgary.ca/~kmuldrew/cryo_ course/cryo_chap6_1.html> [extrait le 2009-10-07]

## Description

La présente invention a pour objet un détecteur selon la revendication 1, qui comprend des compositions chimiques entrant dans la formation de liquides qui, intégrés à un dispositif les contenant hermétiquement, favorisent la détection des modifications de températures dans les congélateurs, lesquelles conditionnent notamment la durée de conservation des denrées alimentaires.

Elle se rapporte d'une manière générale au domaine industriel et commercial de la fabrication et de la diffusion des systèmes de signalisation des écarts de température des congélateurs utilisés par les consommateurs.

Les systèmes d'alarme pour congélateurs conçus par leurs fabricants se limitent à un signal auditif et ont un manque de signalisation de montée en température susceptible de prévenir une décongélation, ainsi que de modifier la durée de conservation des aliments, du fait que la température habituellement recommandée de conservation jusqu'à la date limite de consommation est de -18°C ou plus bas, puisque lorsque la température monte pendant une durée significative, ces délais se réduisent selon des normes également habituellement recommandées, compte tenu qu'à certaines températures la prolifération microbienne est plus ou moins rapide.

EP 0471631 décrit un détecteur à trois cavités, chacune comprenant la même composition chimique.

Les compositions chimiques ci-après permettent d'obtenir des liquides, qui après avoir été portés à l'état solide, et lorsque la température se situe à l'approche des points de décongélation définis, vont fondre avec un temps de réaction proche des surgelés, et ont pour application de se situer dans un détecteur de modification de températures dans les congélateurs.

### Compositions :

1) Liquide BLEU (décongélation à l'approche de -10°Celsius) : Colorant alimentaire E133 / Colorey, à 1 gr / Nacl / Sodium Chloride / Fulka /N° 71380 / pureté >99,5%, à 136gr / Eau déminéralisée en complément pour 1 litre.
2) Liquide VERT (décongélation à l'approche de -6°Celsius) : Colorant alimentaire E133 / E110 / Colorey, à 1gr / Nacl / Sodium Chloride / Fulka / N° 71380 / pureté >99,5%, à 100gr / Eau déminéralisée en complément pour 1 litre.
3) Liquide JAUNE (décongélation à l'approche de -2°Celsius) : Colorant alimentaire E110 / Colorey, à 1 gr / Nacl / Sodium Chloride / Fulka / N° 71380 / pureté >99,5%, à 47gr / Eau déminéralisée en complément pour 1 litre.
4) Liquide ROUGE (décongélation à l'approche de 0°Celsius): Colorant alimentaire E129 / Colorey , à 1 gr / Nacl / Sodium Chloride / Fulka /N° 71380 / pureté >99,5%, à 9gr / Eau déminéralisée en complément pour 1 litre.

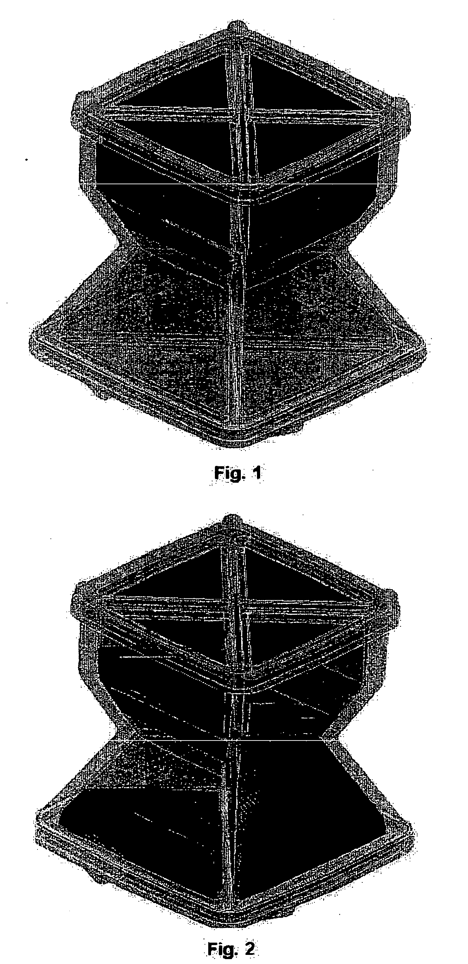

La figure 1 illustre ces compositions à l'état solide dans un exemple de modèle de détecteur à quatre cavités, une pour chaque liquide à degrés de décongélation différents.

La figure 2 illustre ces compositions à l'état liquide partiellement fondues.

## Revendications

1. Détecteur de modification de températures dans les congélateurs **caractérisé en ce qu'**il comporte quatre cavités, chacune comportant une composition chimique de couleur différente, portée à l'état solide et présentant un point de décongélation défini, dont le temps de réaction est proche de celui des surgelés, la première cavité comportant une premiére composition chimique constituée de 136 grammes de chlorure de sodium, de pureté supérieure à 99,5% et de l'eau déminéralisée en complément pour un litre, à laquelle est ajouté un colorant alimentaire bleu E133 pour 1 gramme par litre, qui décongèle à l'approche de -10°C avec un temps de réaction proche de celui des surgelés, la deuxième cavité comportant une deuxième composition chimique constituée de 100 grammes de chlorure de sodium, de pureté supérieure à 99,5% et de l'eau déminéralisée en complément pour un litre, à laquelle est ajouté un colorant alimentaire vert pour 1 gramme par litre, ledit colorant alimentaire étant formé par les colorants alimentaires E133 et E110, qui décongèle à l'approche de - 6°C avec un temps de réaction proche de celui des surgelés, la troisième cavité comportant une troisième composition chimique constituée de 47 grammes de chlorure de sodium, de pureté supérieure à 99,5% et de l'eau déminéralisée en complément pour un litre, à laquelle est ajouté un colorant alimentaire jaune E110 pour 1 gramme par litre, qui décongèle à l'approche de - 2°C avec un temps de réaction proche de celui des surgelés, et la quatrième cavité comportant une quatrième composition chimique constituée de 9 grammes de chlorure de sodium, de pureté supérieure à 99,5% et de l'eau déminéralisée en complément pour un litre, à laquelle est ajouté un colorant alimentaire rouge E129 pour 1 gramme par litre, qui décongèle l'approche de 0°C avec un temps de réaction proche de celui des surgelés.

## Patentansprüche

1. Temperatursensor in Tiefkühlgeräten **dadurch gekennzeichnet, dass** er mit vier Hohlräumen ausgestatt ist, die jeweils mit einer unterschiedlichen farblichen chemischen Zusammensetzung im festen Aggregatzustand gefüllt sind, die jeweils einen bestimmten Taupunkt mit einer Reaktionszeit aufweist, die sich derjenigen von Tiefkühlprodukten annähert. Der erste Hohlraum enthält eine Lösung aus 136 Gramm Natriumchlorid mit einem Reinheitsgrad über 99,5 % pro Liter und entmineralisiertem Wasser sowie ein Gramm pro Liter blauen Lebensmittelfarbstoff E133, die bei ca. -10° C mit einer Reaktionszeit, die sich derjenigen von Tiefkühlprodukten annähert, taut; der zweite Hohlraum enthält eine Lösung aus 100 Gramm Natriumchlorid mit einem Reinheitsgrad über 99,5 % pro Liter und entmineralisiertem Wasser sowie ein Gramm pro Liter grünen Lebensmittelfarbstoff E133 und E110, die bei ca. -6° C mit einer Reaktionszeit, die sich derjenigen von Tiefkühlprodukten annähert, taut; der dritte Hohlraum enthält eine Lösung aus 47 Gramm Natriumchlorid mit einem Reinheitsgrad über 99,5 % pro Liter und entmineralisiertem Wasser sowie ein Gramm pro Liter gelben Lebensmittelfarbstoff E110, die bei ca. -2° C mit einer Reaktionszeit, die sich derjenigen von Tiefkühlprodukten annähert, taut; der vierte Hohlraum enthält eine Lösung aus 9 Gramm Natriumchlorid mit einem Reinheitsgrad über 99,5 % pro Liter und entmineralisiertem Wasser sowie ein Gramm pro Liter roten Lebensmittelfarbstoff E129, die bei ca. 0° C mit einer Reaktionszeit, die sich derjenigen von Tiefkühlprodukten annähert, taut.

## Claims

1. Temperature modification detector in freezers **characterized by** the fact that it includes four cavities, each including a chemical composition of a different colour, brought into the solid state and having a defined defreezing point, whose reaction time is close to that of the deep-frozen products, with a first cavity containing an initial composition comprising 136 grams of sodium chloride having purity in excess of 99.5% and of demineralised water as a complement to make up 1 litre, to which is added a blue edible quality colouring agent E133 for 1 gram per litre, which defreezes on approaching - 10° C with a reaction time close to that of the deep frozen products, a second cavity with a second chemical composition comprising 100 g of sodium chloride, having purity in excess of 99.5% and of de-mineralized water as a complement to make up 1 litre, to which is added a green food quality colouring agent for 1 gram per litre, the said colouring agent consisting of food quality colouring agents E133 and E110, which de-freeze on approaching - 6° C with a reaction time similar to that of the deep frozen products, a third cavity containing a third chemical composition comprising 47 grams of sodium chloride, with purity in excess of 99.5 % and of demineralised water as a complement to make up 1 litre, to which is added a yellow food quality colouring agent E110 for 1 gram per litre, which de-freezes on approaching - 2°C with a reaction time close to that of the deep frozen products, and a fourth cavity comprising a fourth chemical composition consisting of 9 grams of sodium chloride, having purity in excess of 99.5% and of demineralised water as a complement to make up 1 litre, to which is added a red edible quality colouring agent E129 for 1 gram per litre, which de-freezes on approaching 0°C with a reaction time close to that of the deep frozen products.
